# EUROPÄISCHE PATENTSCHRIFT

(11) **EP 1 796 939 B1**
(45) Veröffentlichungstag und Bekanntmachung des Hinweises auf die Patenterteilung: **20.08.2008**
(21) Anmeldenummer: 05787143.6
(22) Anmeldetag: 17.08.2005
(51) Int. Cl.: B60Q 1/38, B60Q 1/34, B60Q 1/52

(54) **VERFAHREN UND VORRICHTUNG ZUR FAHRERUNTERSTÜTZUNG**
DRIVER ASSISTING METHOD AND DEVICE
PROCEDE ET DISPOSITIF D'ASSISTANCE AU CONDUCTEUR

(30) Priorität: 01.10.2004 DE 102004048009
(43) Veröffentlichungstag der Anmeldung: 20.06.2007
(73) Patentinhaber: ROBERT BOSCH GMBH, 70442 Stuttgart (DE)
(72) Erfinder: JORDAN, Ruediger, 70435 Stuttgart (DE); SCHMITZ, Carsten, 71229 Leonberg (DE); BIRNESSER, Andreas Josef, 77836 Rheinmünster (DE)
(86) Internationale Anmeldenummer: PCT/EP2005/054048
(87) Internationale Veröffentlichungsnummer: WO 2006/037686

(56) Entgegenhaltungen:
- DE-A1- 10 238 215
- US-A- 5 673 019
- US-A- 5 712 618
- US-A1- 2002 019 703

## Beschreibung

### Stand der Technik

Die Erfindung betrifft ein Verfahren und eine Vorrichtung zur Fahrerunterstützung, insbesondere zur Unterstützung bei Spurwechseln.

Fahrerassistenzsysteme unterstützen den Fahrer, in kritischen Situationen schnell und richtig zu reagieren. Beispiele hierfür sind z.B. Spurverlassenswarner (LDW: Lane Departure Warning), die den Fahrer bei der Querführung seines Fahrzeugs unterstützen. Bei solchen Assistenzsystemen wird ein Spurwechsel erkannt und zumindest bei unbeabsichtigtem Spurwechsel durch den Fahrer reagiert. Im Stand der Technik, beispielsweise in der DE 102 38 215 A1, sind Vorgehensweisen beschrieben, mit deren Hilfe zwischen einem unbeabsichtigten und einem beabsichtigten Spurwechsel unterschieden wird. Eine derartige Unterscheidung spielt auch im Zusammenhang mit anderen Fahrerassistenzsystemen, beispielsweise adaptiven Fahrgeschwindigkeitsreglern (ACC) ein Rolle.

Die DE 102 38 215 A1 zeigt einen Spürverlassenswarner, bei welchem auf der Basis der Signale eines die Szene vor dem Fahrzeug beobachtende Kamera erkannt wird, ob das Fahrzeug die Fahrspur verlässt oder zu verlassen droht. In diesem Fall wird der Fahrer gewarnt. Dabei wird berücksichtigt, ob es sich bei einer Fahrspur mit gestrichelten oder durchgezogenen Linien handelt, ob auf der Fahrbahn, in die gewechselt wird, Gegenverkehr zu erwarten ist, etc.. In Abhängigkeit der jeweiligen Verkehrssituation erfolgt eine Warnung oder nicht. Ferner ist vorgesehen, dass in den Fällen, in denen eine Fahrerwarnung nicht vorgesehen ist, der Fahrtrichtungsanzeiger zur Information anderer Verkehrsteilnehmer angesteuert wird. Der Fahrer wird dann nicht gewarnt, wenn bei der erfassten Verkehrssituation davon auszugehen ist, dass die Warnung eher unerwünscht ist, beispielsweise bei gestrichelten Linien oder bei einer Nachbarfahrspur mit Verkehr in gleicher Richtung..

Das US-Patent 5673019 zeigt das Einschalten des Fahrtrichtungsanzeigers bei einem Spurwechsel. Dabei ist ein Schalter zum Einschalten des Fahrrichtungsanzeigers vorgesehen, der in Abhängigkeit des Lenkwinkels angesteuert wird.

Das US-Patent 5712618 beschreibt, dass der Fahrtrichtungsanzeiger in Abhängigkeit der lateralen Bewegung des Fahrzeugs eingeschaltet wird.

US-A-2002/001970 zeigt, dass der Fahrrichtungsanzeiger eingeschaltet wird, wenn eine entsprechende Bewegung des Fahrzeugs erkannt wird.

### Vorteile der Erfindung

Durch das Setzen eines den Spurwechsel anzeigenden Signals, beispielsweise eines Blinkers, bei beabsichtigten Spurwechseln werden andere Verkehrsteilnehmer auf den beabsichtigten Spurwechsel hingewiesen und somit die allgemeine Verkehrssicherheit erhöht.

Weiterhin wird in vorteilhafter Weise eine Steigerung des Fahrkomforts durch das Fahrerassistenzsystem erreicht, da der Fahrer den Spurwechselwunsch nicht mehr durch Setzen des Blinkers anzeigen muss. Dies wird durch das Fahrerassistenzsystem übernommen.

Besonders vorteilhaft ist, dass das Setzen des Richtungszeigers am Fahrzeug durch das Fahrerassistenzsystem nur dann erfolgt, wenn der Richtungszeiger nicht bereits durch den Fahrer gesetzt wurde.

In vorteilhafter Weise wird nach vollzogenem Spurwechsel der Richtungszeiger deaktiviert, wenn dies nicht durch den Fahrzeugführer selbst vorgenommen wird.

Weitere Vorteile ergeben sich aus der nachfolgenden Beschreibung von Ausführungsbeispielen bzw. aus den abhängigen Patentansprüchen.

### Zeichnung

Die Erfindung wird nachstehend anhand der in der Zeichnung dargestellten Ausführungsformen näher erläutert. Figur 1 zeigt dabei ein Übersichtsbild für eine Verarbeitungseinheit, in welcher die Spurwechselerkennung durchgeführt wird. Diese Verarbeitungseinheit ist am Beispiel eines Spurverlassenswarners dargestellt. In Figur 2 ist ein Flussdiagramm dargestellt, welches eine grundsätzliche Vorgehensweise zur Spurwechselklassiftzierung im Zusammenhang mit der Spurverlassenswarnung darstellt. In Figur 3 ist ein Flussdiagramm skizziert, welches ein Ausführungsbeispiel für das Setzen bzw. Rücksetzen Richtungszeigers skizziert. Figur 4 schließlich zeigt den modularen Aufbau der Verarbeitungseinheit eines Spurverlassenswarners, bei welchem das Setzen des Richtungszeigers realisiert ist.

### Beschreibung von Ausführungsbeispielen

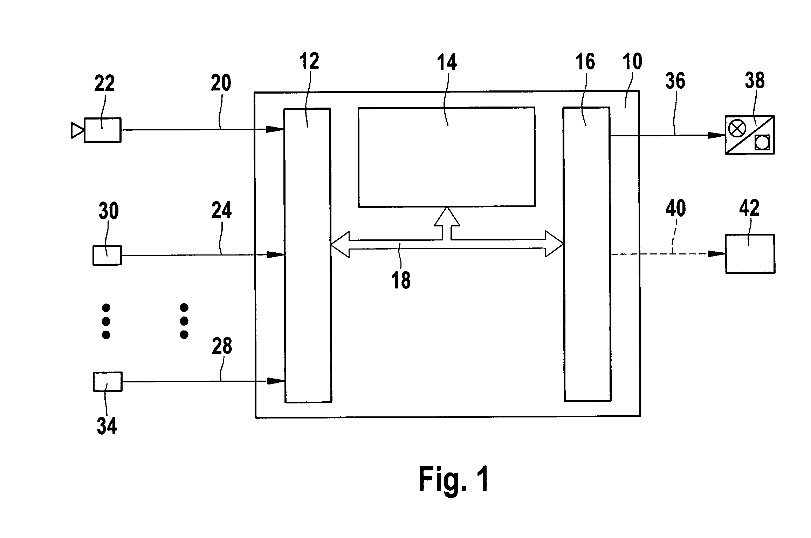

Figur 1 zeigt eine Vorrichtung, welche Teil eines Systems zur Fahrerunterstützung ist (z.B. zur Warnung und/oder zum Ansteuern eines Stellelements zur Querführung des Fahrzeugs bei Verlassen oder drohendem Verlassen der Fahrspur). Dargestellt ist eine Steuer- bzw. Auswerteeinheit 10, welche wenigstens eine Eingangsschaltung 12, einen Mikrocomputer 14 und eine Ausgangsschaltung 16 aufweist. Diese Elemente sind mit einem Bussystem 18 zum gegenseitigen Datenaustausch miteinander verbunden. Der Eingangsschaltung 12 werden Eingangsleitungen von verschiedenen Messeinrichtungen zugeführt, über die Messsignale bzw. Messinformationen übermittelt werden. Eine erste Eingangsleitung 20 verbindet die Eingangsschaltung 12 mit einem Bildsensorsystem 22, welches die Szene vor dem Fahrzeug aufnimmt. Entsprechende Bilddaten werden über die Eingangsleitung 20 übermittelt. Ferner sind Eingangsleitungen 24 bis 28 vorgesehen, welche die Eingangsschaltung 12 mit Messeinrichtungen 30 bis 34 verbinden. Bei diesen Messeinrichtungen handelt es sich beispielsweise um Messeinrichtungen zur Messung der Fahrzeuggeschwindigkeit, zur Erfassung des Lenkwinkels und/oder der Gierrate, zur Erfassung einer Größe, welche einen Beschleunigungswunsch des Fahrers repräsentiert, beispielsweise das Ausmaß der Fahrpedalbetätigung durch den Fahrer, zur Erfassung der Geschwindigkeit und/oder der Beschleunigung des Fahrzeugs sowie zur Erfassung weiterer Betriebsgrößen des Fahrzeugs, welche im Zusammenhang mit der nachfolgend beschriebenen Vorgehensweise Bedeutung haben. Über die Ausgangsschaltung 16 und Ausgangsleitung 36 wird wenigstens eine Warneinrichtung 38 angesteuert, beispielsweise eine Warnlampe und/oder ein Lautsprecher für eine akustische Warnung und/oder für eine Sprachausgabe und/oder ein Display für die Anzeige eines Bildes und/oder ein Stellelement für eine haptische Anzeige, mit deren Hilfe der Fahrer über das (drohende) Verlassen der Fahrspur informiert wird. Darüber hinaus oder alternativ dazu ist in einigen Ausführungsbeispielen vorgesehen, über die Ausgangsschaltung 16 und eine Ausgangsleitung 40 ein Stellsystem zu 42 anzusteuern, welches automatisch beispielsweise durch Eingriff in die Lenkung des Fahrzeugs das Fahrzeug wieder in die Spur zurückführt (Querführung) und so das Verlassen der Fahrspur verhindert.

Mittels Methoden der Bildanalyse wird im Ausführungsbeispiel des Spurverlassenswarners auf der Basis der vom Bildsensorsystem zugeführten Bilddaten der Szene vor dem Fahrzeug Spurdaten ermittelt, die den Verlauf und die Größe der Fahrspur repräsentieren. So werden z.B. die Fahrspurrandmarkierungen (linker und/oder rechter Fahrspurrand) erfasst und der Verlauf des jeweiligen Fahrspurrandes beispielsweise als Polynom (Potenzfunktion dritter Ordnung) angenähert. Ferner wird der Verlauf die Fahrspur des Fahrzeugs, beispielsweise für das rechte und/oder linke Rad, aus Fahrzeuggeometriegrößen, den aktuellen und ggf. vergangenen Größen der Fahrzeuggeschwindigkeit, dem Lenkwinkel oder der Gierrate, etc. berechnet und ebenfalls als Polynom dargestellt. Aus den genannten Daten werden weitere Spurdaten berechnet, beispielsweise der laterale Abstand zwischen Spurmarkierung und Spur des Fahrzeugs (rechte Seite zum rechten Rand, linke Seite zum linken Rand), die Krümmung der Fahrspur, und/oder der Winkel zwischen Fahrspur und Spurmarkierung (rechte Fahrspur zum rechten Rand, linke Fahrspur zum linken Rand) anhand von Tangentenvergleichen. Daraus wird in einer Ausführung ggf. auch die erwartete Zeit bis zum Kreuzen der Linien (time to line corssing) errechnet. Die Warnung erfolgt im bevorzugtem Ausführungsbeispiel bei Überschreiten eines vorgegebenen lateralen Abstands oder bei Unterschreiten eines vorgegebenen Zeitwertes.

Wesentlich bei einer solchen Funktion ist, dass der Fahrer nur dann gewarnt wird, wenn er ein Überfahren der Spurmarkierung tatsächlich nicht beabsichtigt.

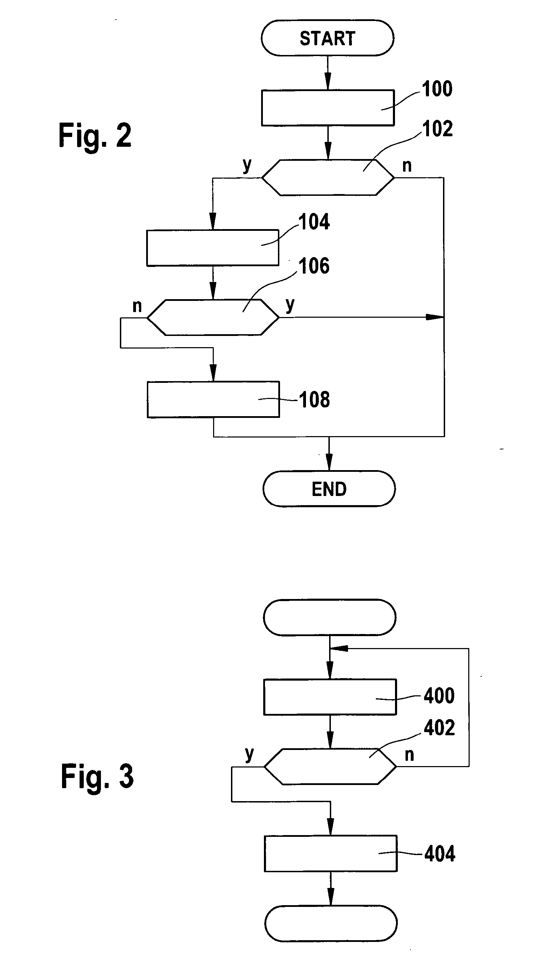

Figur 2 zeigt ein Flussdiagramm, bei welchem der skizzierte Spurverlassenswarner durch einen Klassifikator ergänzt ist, der auf der Basis von Betriebsgrößen des Fahrzeugs die Spurwechselsituation bewertet und in "unbeabsichtigter Spurwechsel" oder "beabsichtigter Spurwechsel" klassifiziert. Das Flussdiagramm der Figur 2 skizziert dabei ein entsprechendes Programm, welches im Mikrocomputer der in Figur 1 skizzierten Vorrichtung z.B. in vorbestimmten Zeitabständen durchlaufen wird. Im ersten Schritt 100 werden (einmal für die eine Fahrzeugseite, in einem anderen Durchlauf für die andere Fahrzeugseite) die oben skizzierten Fahrspurdaten eingelesen, d. h. der Verlauf der Fahrspurrandmarkierung, der Verlauf der Istfahrspur des Fahrzeugs, eine Größe für den lateralen Abstand zwischen Fahrzeug und Fahrspurrand, eine Größe für den Winkel zwischen Fahrzeugspur und Fahrspurrand, bzw. die weiteren oben genanten Betriebsgrößen, etc. Im darauffolgenden Schritt 102 wird überprüft, ob ein Verlassen der Fahrspur vorliegt bzw. ob ein solches Verlassen droht. Ist dies nicht der Fall, wird das Programm beendet und mit dem nächsten Zeitintervall mit Schritt 100 von vom durchlaufen. Wird ein Verlassen bzw. ein drohendes Verlassen erkannt, so wird in Schritt 104 durch den Klassifikator anhand von Betriebsgrößen ermittelt, ob der Spurwechsel beabsichtigt oder unbeabsichtigt ist. Daraufhin wird in Schritt 106 überprüft, ob das Verlassen der Fahrspur beabsichtigt ist oder nicht. Ist es beabsichtigt, unterbleibt die Warnung bzw. die Querführungsreaktion und das Programm wird mit Schritt 100 wiederholt. Ist im anderen Fall jedoch erkannt worden, dass das Verlassen der Fahrspur unbeabsichtigt ist, so wird gemäß Schritt 108 optisch, akustisch und/oder haptisch gewarnt bzw. eine Spurhaltereaktion, beispielsweise das Ansteuern eine Stellelements zur Beeinflussung der Lenkung, ausgeführt.

Es sind verschiedene Ausführung zur Klassifizierung bekannt. Die grundsätzliche Vorgehensweise zur Klassifikation baut auf der Auswertung von wenigstens zwei Betriebsgrößen des Fahrzeugs auf, anhand derer auf das Verhalten des Fahrers geschlossen werden kann. Betriebsgrößen, die dafür geeignet sind, sind beispielsweise der Lenkwinkel (alternativ die Gierrate), die Geschwindigkeit des Fahrzeugs bzw. die Beschleunigung oder Verzögerung, der laterale Offset zwischen Fahrzeugspur und Fahrspurrand, insbesondere seine Veränderung, und/oder der Winkel der Fahrzeugspur zum Fahrbahnrand. Dabei wird in Bezug auf den Lenkwinkel das Lenkverhalten abgeprüft, welches bei Spurwechselabsicht deutlich erkennbar ist. Ein Lenkwinkel größer als ein vorbestimmter Wert, insbesondere eine entsprechend zeitliche Änderung des Lenkwinkels deutet auf Spurwechselabsicht hin. Während einer Kurvenfahrt ist hierbei die ermittelte Fahrbahnkrümmung zu berücksichtigen. Ferner liegt bei Spurwechselabsicht insbesondere nach links meistens eine Beschleunigung des Fahrzeugs vor, so dass bei einer Beschleunigung des Fahrzeugs bzw. einem Beschleunigungswunsch des Fahrers größer als ein vorgegebener Schwellenwert von einem beabsichtigten Spurwechsel auszugehen ist. Eine weitere geeignete Größe ist der laterale Abstand des Fahrzeugs zur Spurmarkierung, insbesondere dessen zeitliche Änderung. Diese stellt ein Maß für die Stärke, mit der sich ein Fahrzeug der Fahrspurrandmarkierung nähert, dar. Dieses Maß ist bei gewollten Spurwechseln erheblich größer als bei ungewollten. Entsprechendes gilt für den Winkel zur Fahrspurmarkierung, der bei gewollten Spurwechseln deutlich größer ist als bei ungewollten.

Zusammenfassend ist festzustellen, dass eine Klassifikation des Spurwechselvorgangs in ungewollte und gewollte Spurwechsel anhand von Betriebsgrößen des Fahrzeugs erfolgt, insbesondere wenn der Lenkwinkel einen Schwellenwert überschreitet und/oder der Beschleunigungswunsch des Fahrers einen Schwellenwert überschreitet und/oder der zeitliche Verlauf des lateralen Abstands zur Randmarkierung einen Schwellenwert überschreitet und/oder der Winkel zur Randmarkierung einen Schwellenwert überschreitet. Diese Kriterien werden gewichtet zur Klassifizierung des Spurwechselvorgangs in beabsichtigte und unbeabsichtigte Spurwechsel ausgenutzt, wobei im Allgemeinen ein beabsichtigter Spurwechsel bei Vorliegen wenigstens einer der beschriebenen Situationen erkannt wird, ein unbeabsichtigter bei Nichtvorliegen.

Durch die Klassifikation wird also mit hoher Wahrscheinlichkeit erkannt, ob ein Spurwechsel absichtlich oder unbeabsichtigt erfolgt.

Zur Realisierung des Klassifikators nach Maßgabe der oben dargestellten Vorgehensweise eignen sich in einem bevorzugten Ausführungsbeispiel neuronale Netze. In einem bevorzugten Ausführungsbeispiel hat sich ein MLP-Netz (Mehrlagiges Perzeptron) als geeignet erwiesen. Diesem neuronalen Netz werden die oben dargestellten Größen für die linke und für die rechte Seite zugeführt. Nach Maßgabe der den einzelnen Neuronen zugeordneten Gewichten (Schwellenwerte) wird durch das neuronale Netz eine Ausgangsgröße gebildet, welche einen gewollten Spurwechsel oder einen ungewollten Spurwechsel anzeigt.

Eine zweite Realisierungsmöglichkeit besteht in der Vorgabe konkreter Bedingungen für die einzelnen Größen, aus deren Vorliegen ein gewolltes oder ein ungewolltes Spurwechselverhalten abgeleitet wird, wobei zur Absicherung der Entscheidung zumindest in unklaren Fällen eine Kombination der Kriterien heranzuziehen ist. Wenn z. B. der Winkel zur Fahrspur beim Spurberühren größer als 4° ist, dann kann eine Unaufmerksamkeit des Fahrers ausgeschlossen werden, sofern keine erhebliche Spurkrümmung vorliegt. Entsprechend kann man für jede verwendete Größe eine entsprechende Entscheidungsregel bilden. Für die verbleibenden Situationen, die in keiner Entscheidungsregel ein eindeutiges Ergebnis ergeben, wird anhand eines verbleibenden Merkmals (beispielsweise der zeitlichen Änderung des Abstands zur Spurgrenze) scharf entschieden, ob ein gewollter oder ein ungewollter Spurwechsel vorliegt. Die Entscheidungskriterien, zumindest ihre Gewichtung, sind dabei in der Regel für die linke und die rechte Seite verschieden.

Darüber hinaus sind beispielsweise aus dem eingangs genannten Stand der Technik auch andere Vorgehensweisen zur Unterscheidung eines beabsichtigten und eines unbeabsichtigten Spurwechsels bekannt. Dort wird anhand der Aufmerksamkeit des Fahrers die Spurwechselabsicht festgestellt, indem davon ausgegangen wird, dass beim aufmerksamen Fahrer ein beabsichtigter Spurwechsel vorliegt.

Ist auf eine der vorstehend genannten Arten eine Spurwechselabsicht erkannt worden, so wird das in Figur 3 skizzierte Programm gestartet. Es wird, sofern noch nicht vom Fahrer geschehen, im Schritt 400 der Blinker des Fahrzeugs auf der Seite, zu der der Spurwechsel hin erfolgt ist, gesetzt. Diese Information wird bei der Ermittlung des Spurwechsels aufgrund des Fahrzeugkurses und der Fahrbahnrandmarkierung übermittelt.

Danach wird im Schritt 402 überprüft, ob der Spurwechsel abgeschlossen ist oder nicht. Ein abgeschlossener Spurwechsel wird dadurch erkannt, dass sich das Fahrzeug zwischen zwei Randmarkierungen einer Fahrspur, in einer Ausführung nach Verstreichen einer vorgegeben Zeitperiode, befindet. Dies wiederum wird durch Analyse des Bildes der Videokamera des Spurverlassenswarners ermittelt, aus dem die Position des Fahrzeugs innerhalb der Fahrspur berechnet werden kann. Ist der Spurwechsel nicht abgeschlossen, so wird das Ansteuern des Blinkers gemäß Schritt 400 aufrecht erhalten. Ist der Spurwechsel abgeschlossen, so wird gemäß Schritt 404 die Ansteuerung des Blinkers beendet, d.h. der Blinker deaktiviert und das in Figur skizzierte Programm beendet.

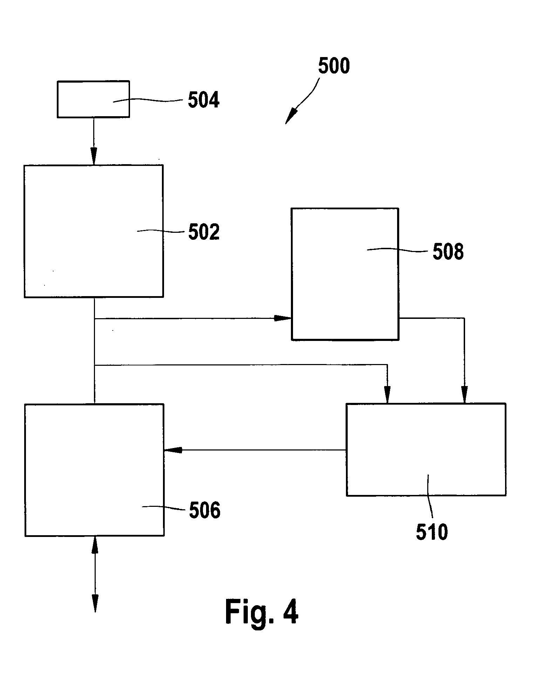

Figur 4 zeigt den Aufbau der Verarbeitungseinheit 500 mit mehreren Programmmodulen. Die Verarbeitungseinheit umfasst für die vorstehend beschriebene Vorgehensweise ein erstes Programmmodul 502, welches die Spurerkennungssoftware umfasst. Dieses Programmmodul erhält von einer Kamera 504 aufgenommene Bilder der Szene vor dem Fahrzeug und verarbeitet diese Bilder im Sinne der oben dargestellten Vorgehensweise zur Erkennung der Fahrbahnrandlinien, des lateralen Abstands zu den Randlinien, der Kurvenkrümmung der Linien, des Winkels zu den Linien, etc. Ferner ist ein Anschlussmodul 506 zu einem Bussystem des Fahrzeugs, beispielsweise CAN, Teil der Verarbeitungseinheit. Über dieses Bussystem wird der Verarbeitungseinheit Betriebsgrößen wie Lenkwinkel, Fahrpedalstellung, Bremsbestätigung, Gierrate, etc. zugeführt. Die über CAN übermittelten Betriebsgrößen werden dem Modul 502 zur Bestimmung des Fahrzeugkurses, der Geschwindigkeit, etc. übermittelt. Dort werden dieses Informationen zusammen mit den Informationen der Bildverarbeitungseinheit zur Erkennung eines Spurwechsels des Fahrzeugs ausgwertet, beispielsweise auf der Basis der Verringerung des lateralen Abstandes oder auf der Basis der Zeit bis zum Erreichen der Fahrbahnrandmarkierung. Wird vom Modul 502 ein Spurwechsel erkannt, wird diese Information einem Modul 508 zugeführt. Dieses Modul dient zur Erkennung der Spurwechselabsicht (Lane Change Intention Discrimination). Neben der Information über ein bevorstehendes oder erfolgtes Spurverlassen werden diesem Modul über das Bussystem die notwendigen weiteren Informationen zugeführt, die zur Durchführung einer der oben genannten Vorgehensweisen zur Spurwechselabsichtserkennung zugrunde liegen. Das Modul 508 übermittelt dann bei erkannter Spurwechselabsicht die entsprechende Information an ein Modul 510. Diesem Modul 510 wird vom Modul 502 die Information über den erkannten Spurwechsel zugeführt. Das Modul 510 ermittelt dann auf der Basis der zugeführten Größen wie in Figur 3 beispielsweise dargestellt, ob ein Blinker zu setzen ist oder nicht. Ist ein Blinker zu setzen, gibt das Modul 510 ein entsprechendes Signal über das Busmodul 506 ab, durch welches der Richtungsanzeiger des Fahrzeugs betätigt bzw. bei vollendetem Spurwechsel (entsprechende Information kommt vom Modul 502) wieder ausgeschaltet wird.

## Patentansprüche

1. Verfahren zur Fahrerunterstützung, wobei ein Spurwechsel bzw. ein bevorstehender Spurwechsel des Fahrzeugs ermittelt wird, **dadurch gekennzeichnet, dass** auf der Basis von Betriebsgrößen des Fahrzeugs die Spurwechselsituation bewertet wird und in unbeabsichtigter Spurwechsel oder beabsichtigter Spurwechsel klassifiziert wird und dass bei einem beabsichtigten Spurwechsel ein Richtungszeichen, vorzugsweise der Blinker des Fahrzeugs, betätigt wird.

2. Verfahren nach Anspruch 1, **dadurch gekennzeichnet, dass** der Richtungszeiger auf der Seite betätigt wird, zu der der Spurwechsel stattfindet.

3. Verfahren nach einem der vorhergehenden Ansprüche, **dadurch gekennzeichnet, dass** bei erkannter Beendigung des Spurwechsels der Richtungszeiger wieder deaktiviert wird.

4. Verfahren nach einem der vorhergehenden Ansprüche, **dadurch gekennzeichnet, dass** der Richtungszeiger nur dann betätigt wird, wenn ein Spurwechsel erkannt wird und eine Spurwechselabsicht vorliegt.

5. Verfahren nach einem der vorhergehenden Ansprüche, **dadurch gekennzeichnet, dass** bei unabsichtlichem Spurwechsel der Richtungszeiger nicht betätigt wird, sondern der Fahrer gewarnt wird.

6. Verfahren nach einem der vorhergehenden Ansprüche, **dadurch gekennzeichnet, dass** der Richtungszeiger nur dann betätigt wird, wenn der Fahrer des Fahrzeugs keine Betätigung des Richtungszeigers vorgenommen hat.

7. Vorrichtung zur Fahrerunterstützung mit einer Verarbeitungseinheit (10), die einen Spurwechsel des Fahrzeugs erkennt und die ferner eine Spurwechselabsicht ermittelt, **dadurch gekennzeichnet, dass** die Verarbeitungseinheit (10) einen Klassifikator umfasst, der auf der Basis von Betriebsgrößen des Fahrzeugs die Spurwechselsituation bewertet und in unbeabsichtigter Spurwechsel oder beabsichtigter Spurwechsel klassifiziert, wobei die Verarbeitungseinheit (10) derart konfiguriert ist, dass bei einem beabsichtigten Spurwechsel ein Richtungszeiger des Fahrzeugs betätigt wird.

## Claims

1. Driver assisting method, wherein a lane change or an imminent lane change of the vehicle is determined, **characterized in that** the lane change situation is evaluated on the basis of operational variables of the vehicle and is classified as an unintentional lane change or as an intentional lane change, and **in that** in the case of an intentional lane change a direction indicator, preferably the flashing indicator light of the vehicle, is activated.

2. Method according to Claim 1, **characterized in that** the direction indicator is activated on the side on which the lane change takes place.

3. Method according to one of the preceding claims, **characterized in that** when it is detected that the lane change ends the direction indicator is deactivated again.

4. Method according to one of the preceding claims, **characterized in that** the direction indicator is activated only if a lane change is detected and there is an intention to change lane.

5. Method according to one of the preceding claims, **characterized in that** in the case of an unintentional lane change the direction indicator is not activated, but rather the driver is warned.

6. Method according to one of the preceding claims, **characterized in that** the direction indicator is activated only if the driver of the vehicle has not activated the direction indicator.

7. Driver assisting device having a processing unit (10) which detects a lane change of the vehicle and which also determines an intention to change lane, **characterized in that** the processing unit (10) comprises a classifier which evaluates the lane change situation on the basis of operational variables of the vehicle and classifies it as an unintentional lane change or an intentional lane change, wherein the processing unit (10) is configured in such a way that in the case of an intentional lane change a direction indicator of the vehicle is activated.

## Revendications

1. Procédé d'assistance de conduite selon lequel on détermine un changement de voie ou un futur changement de voie pour le véhicule,
**caractérisé en ce que**
sur le fondement des paramètres de fonctionnement du véhicule, on évalue la situation de changement de voie et on la classe en un changement de voie non intentionnel ou un changement de voie intentionnel et **en ce que** pour un changement de voie intentionnel, on met en oeuvre un indicateur de direction, de préférence le clignotant du véhicule.

2. Procédé selon la revendication 1,
**caractérisé en ce que**
l'indicateur de direction est actionné sur le côté où se produit le changement de voie de circulation.

3. Procédé selon l'une des revendications précédentes,
**caractérisé en ce que**
l'indicateur de direction est neutralisé, lorsque la fin du changement de voie est détectée.

4. Procédé selon l'une des revendications précédentes,
**caractérisé en ce que**
l'indicateur de direction n'est actionné que si un changement de voie a été détecté et si l'on est en présence d'une intention de changer de voie.

5. Procédé selon l'une des revendications précédentes,
**caractérisé en ce qu'**
en cas de changement de voie non intentionnel, l'indicateur de direction n'est pas actionné mais le conducteur est averti.

6. Procédé selon l'une des revendications précédentes,
**caractérisé en ce que**
l'indicateur directionnel est seulement actionné si le conducteur du véhicule n'actionne pas l'indicateur directionnel.

7. Dispositif d'assistance de conduite comportant une unité de traitement (10) détectant un changement de voie du véhicule et déterminant en outre une intention de changement de voie,
**caractérisé en ce que**
l'unité de traitement (10) comporte un moyen de classification qui exploite la situation de changement de voie en se fondant sur les paramètres de fonctionnement du véhicule et les classe en changements de voie non intentionnels ou changements de voie intentionnels, l'unité de traitement (10) étant configuré pour qu'en cas de changement de voie intentionnel, un indicateur de direction du véhicule soit actionné.
